# EUROPEAN PATENT APPLICATION

(11) **EP 4 530 917 A1**
(43) Date of publication of application: **02.04.2025**
(21) Application number: 24189414.6
(22) Date of filing: 18.07.2024
(51) Int. Cl.: G06F 30/34, G06F 119/10, G06F 119/12, G06F 30/3312, G06F 30/398, G06F 30/367

(54) **TIMING MODEL FOR CHIP-TO-CHIP CONNECTION IN A PACKAGE**

(30) Priority: 29.09.2023 US 202318375299
(71) Applicant: INTEL Corporation, Santa Clara, CA 95054 (US)
(72) Inventor: WANG, Xiangyong, San Jose, CA 95134 (US); KEHLET, David, Los Altos Hills, CA 94024 (US); ARISTIZABAL, Diana Crisina Ojeda, Scarborough, ON M1N2J7 (CA); KUON, Ian, Toronto, ON M8Z2X4 (CA); AVCI, Mehmet, Toronto, ON (CA)
(74) Representative: Viering, Jentschura & Partner mbB Patent- und Rechtsanwälte

(57) **Abstract**

Integrated circuit devices, methods, and circuitry are provided for performing timing analysis for chip-to-chip connections between integrated circuits in a multichip package. A system may include an integrated circuit package and a computing system. The integrated circuit package may have a first integrated circuit connected to a second integrated circuit via a chip-to-chip connection. The chip-to-chip connection may also be connected to a package ball. The computing system may perform timing analysis on a circuit design for the first integrated circuit using parasitic data provided by the user to model the chip-to-chip connection.

## Description

### GOVERNMENT LICENSE RIGHTS

This Invention was made with Government support under Agreement No. N0016419-9-0001, awarded by NSWC Crane Division. The Government has certain rights in the Invention.

### BACKGROUND

This disclosure relates generally to integrated circuit (IC) devices such as programmable logic devices (PLDs). More particularly, this disclosure relates to design tools that can model timing between multiple integrated circuits in a package without modeling every integrated circuit.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it may be understood that these statements are to be read in this light, and not as admissions of prior art.

Multiple integrated circuits may be combined in a single package. One particularly versatile type of integrated circuit is a programmable logic device (PLD). In contrast to many application-specific integrated circuits, a PLD may include programmable logic circuitry, such as field programmable gate array (FPGA) circuitry, that may be programmed by a third-party entity other than the manufacturer with a circuit design with a wide variety of possible functionalities. Design software may simulate, synthesize, place, route, and analyze timing to generate a bitstream that may be used to program the programmable logic circuitry. In many cases, the third-party entity may also design another integrated circuit (e.g., a chiplet) to connect to a PLD in the same package. In general, the design software that compiles the circuit design for the PLD may also account for chip-to-chip connections from the PLD to the third-party integrated circuit by modeling every integrated circuit in a package. Yet modeling the third-party integrated circuit in the design software may entail a significant amount of time and labor. Moreover, the third-party entity may prefer not to divulge the design of the third-party integrated circuit in sufficient detail to enable the PLD design software to fully model both the PLD and the third-party integrated circuit.

### BRIEF DESCRIPTION OF THE DRAWINGS

Various aspects of this disclosure may be better understood upon reading the following detailed description and upon reference to the drawings in which:
FIG. 1 is a block diagram of a design system that may program a programmable logic device in a package connected to a second integrated circuit in the package via a chip-to-chip connection;
FIG. 2 is a block diagram illustrating a manner of modeling the chip-to-chip connection between the programmable logic device and the second integrated circuit in the package through a connection to a ball grid array of the package;
FIG. 3 is a circuit diagram of a model of the chip-to-chip connection between the programmable logic device and the second integrated circuit in the package as well as the connection from the programmable logic device to the ball grid array of the package;
FIG. 4 is a block diagram of an example arrangement of an integrated circuit package that may be programmed based on the model with third-party integrated circuits connected in parallel to a programmable logic device;
FIG. 5 is a block diagram of an example arrangement of an integrated circuit package that may be programmed based on the model with third-party integrated circuits directly connected in series to a programmable logic device;
FIG. 6 is a flowchart of a method for modeling chip-to-chip connections between a programmable logic device and a second integrated circuit in a package through a connection to a ball grid array of the package;
FIG. 7 is a block diagram of a package design with chip-to-chip connections between a first integrated circuit and a second integrated circuit;
FIG. 8 is a block diagram showing a modification of the package design of FIG. 7 to connect the chip-to-chip connections between the first integrated circuit and the second integrated circuit to a ball grid array of the package;
FIG. 9 is a block diagram illustrating how timing may be modeled based on the connections to the ball grid array of the package;
FIG. 10 Illustrates a data format on the chip-to-chip connections that are used by design software to calculate timing; and
FIG. 11 is a block diagram of a data processing system incorporating the integrated circuit package.

### DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

An integrated circuit package may include a programmable logic circuitry, such as field programmable gate array (FPGA) circuitry, that may be programmed by a third-party entity other than the manufacturer with a circuit design. Design software may simulate, synthesize, place, route, and analyze timing to generate a bitstream that may be used to program the programmable logic circuitry. In many cases, the third-party entity may also design another integrated circuit (e.g., a chiplet) to connect to a PLD in the same package (e.g., a multichip package (MCP), a multichip module (MCM), a system-in-package (SiP)). Rather than model every integrated circuit in the entire package to determine timing constraints, this disclosure describes systems and methods to obtain timing constraints by connecting chip-to-chip connections to a ball grid array (BGA) of the package. Timing constraints may then be obtained by modeling the connections to the BGA of the package. Indeed, design software may model internal circuitry of a first integrated circuit (e.g., a PLD) without modeling internal circuitry of a second integrated circuit (e.g., a third-party chiplet).

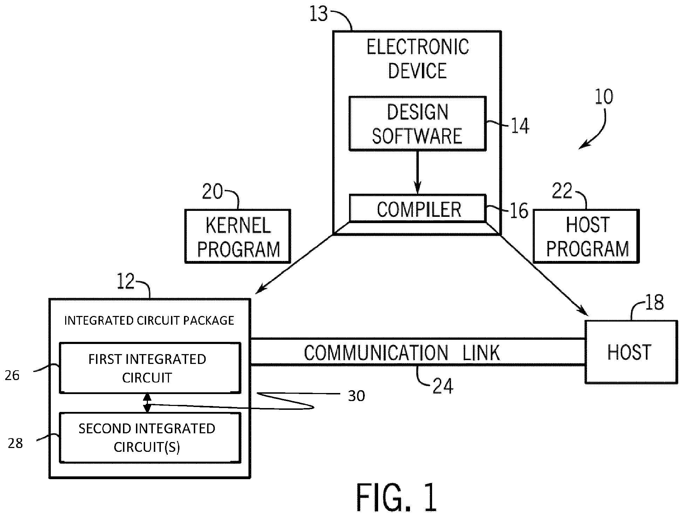

With the foregoing in mind, FIG. 1 illustrates a block diagram of a system 10 that may be used in configuring an integrated circuit package 12 based on timing analysis of chip-to-chip connections connected to a ball grid array (BGA) of the integrated circuit package 12. A designer may desire to implement an integrated circuit design on the integrated circuit package 12 (e.g., a programmable logic device such as a field-programmable gate array (FPGA) or an application-specific integrated circuit (ASIC) that includes programmable logic circuitry). The integrated circuit package 12 may include multiple integrated circuits in a package (e.g., a multi-chip package (MCP), a multi-chip module (MCM), a system-in-package (SiP)), or multiple integrated circuits in multiple packages communicating remotely (e.g., via wires or traces). In some cases, the designer may specify a high-level program to be implemented, such as an OPENCL^{®} program that may enable the designer to more efficiently and easily provide programming instructions to configure a set of programmable logic cells for the integrated circuit package 12 without specific knowledge of low-level hardware description languages (e.g., Verilog, very high speed integrated circuit hardware description language (VHDL)). For example, since OPENCL^{®} is quite similar to other high-level programming languages, such as C++, designers of programmable logic familiar with such programming languages may have a reduced learning curve than designers that are required to learn unfamiliar low-level hardware description languages to implement new functionalities in the integrated circuit package 12.

In a configuration mode of the integrated circuit package 12, a designer may use an electronic device 13 (e.g., a computer or computing system having processing circuitry and memory storing data or instructions executable by the processing circuitry to perform operations) to implement high-level designs (e.g., a system user design) using design software 14, such as a version of INTEL^{®} QUARTUS^{®} by INTEL CORPORATION. The design software 14 may represent any suitable instructions stored on one or more tangible, non-transitory, machine-readable media such as a memory or storage device that stores instructions that, when executed, cause operations to be performed that include timing analysis operations. The electronic device 13 may use the design software 14 and a compiler 16 to convert the high-level program into a lower-level description (e.g., a configuration program, a bitstream). The compiler 16 may provide machine-readable instructions representative of the high-level program to a host 18 and the integrated circuit package 12. The host 18 may receive a host program 22 that may be implemented by a kernel program 20. To implement the host program 22, the host 18 may communicate instructions from the host program 22 to the integrated circuit package 12 via a communications link 24 that may be, for example, direct memory access (DMA) communications or peripheral component interconnect express (PCIe) communications. While the example of FIG. 1 illustrates a kernel program 20 (e.g., a bitstream) that may interface with a host program 22, in other examples, the integrated circuit package 12 may be programmed to implement any suitable circuit design using any suitable configuration data (e.g., a bitstream) that may operate independently of a host program.

The integrated circuit package 12 may include a first integrated circuit 26 connected to a second integrated circuit 28 via a chip-to-chip connection 30. By way of example, the first integrated circuit 26 may include programmable logic circuitry (e.g., field programmable gate array (FPGA) circuitry) that includes programmable logic blocks and digital signal processing (DSP) blocks and the second integrated circuit 28 may represent a first-party tile or a third-party chiplet (e.g., a processor or coprocessor, a hardware accelerator, an application-specific integrated circuit (ASIC), a memory device, a communication device such as a network interface). As used herein, a component that is described as "first-party" corresponds to a component that has been designed or manufactured by a first entity and a component that is described as "third-party" corresponds to a component that is designed or manufactured by a different entity. For example, the first integrated circuit 26 may be designed and/or manufactured by the same entity that designed or provided the design software 14, and thus the first integrated circuit 26 may be first party with respect to the design software 14. In another example, the second integrated circuit 28 may be designed and/or manufactured by a different entity than the entity that designed or provided the design software 14, and thus the second integrated circuit 28 may be third party with respect to the design software 14.

In some embodiments, the kernel programs 20 and the host 18 may enable configuration of these programmable circuits of the first integrated circuit 26. The programmable logic blocks may include circuitry and/or other logic elements and may be configurable to implement a variety of functions in combination with digital signal processing (DSP) blocks.

The designer may use the design software 14 to generate and/or to specify a low-level program, such as the low-level hardware description languages described above. Further, in some embodiments, the system 10 may be implemented without a separate host program 22. Thus, embodiments described herein are intended to be illustrative and not limiting. The design software 14 may simulate, synthesize, place, route, and analyze timing of the designer's circuit design to generate the configuration data (e.g., kernel program 20, bitstream) used to program the integrated circuit package 12.

When the first integrated circuit 26 includes programmable logic circuitry, the programmable logic of the first integrated circuit 26 may be impacted by chip-to-chip delays on the chip-to-chip connection 30 between the second integrated circuit 28 and the first integrated circuit 26. As such, the design software 14 may take into account the signal delays that result when a signal travels on a wire to or from the programmable logic circuitry of the first integrated circuit due to the resistance and parasitic capacitance and/or inductance of the wire.

To perform timing analysis, the design software 14 may take into account the signal delays that result when a signal travels on a wire to or from the programmable logic circuitry of the first integrated circuit due to the resistance and parasitic capacitance and/or inductance of the wire. The design software 14 may determine chip-to-chip delays between the first integrated circuit 26 and a first-party second integrated circuit 28 on the chip-to-chip connection 30 by fully modeling the first integrated circuit 26 and the first-party second integrated circuit 28. This is because the design of the first-party second integrated circuit 28 may be known to the manufacturer of the first integrated circuit 26 and design software 14. But modeling a chiplet in the design software 14 may be tremendous work. The design software 14 may use a specific form of design instruction that may involve functional simulation models, operation modes, power models, and timing models, and so forth. As such, to determine timing delays between the first integrated circuit 26 and a third-party second integrated circuit 28 in a much more user-friendly way, the design software 14 may model timing delays based on parasitic characteristics of the integrated circuit package 12 and a connection between the chip-to-chip connection 30 and a ball grid array (BGA) of the integrated circuit package 12.

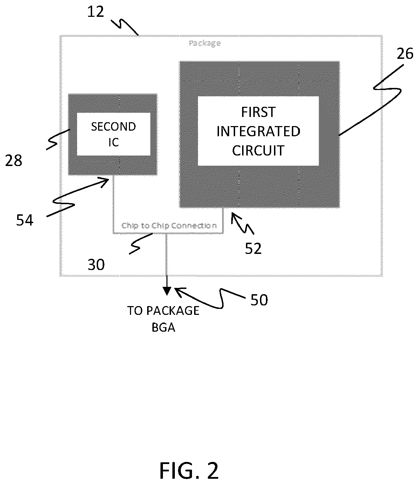

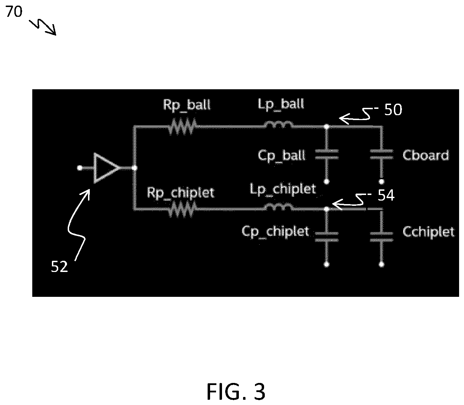

FIGS. 2 and 3 illustrate an example of modeling the chip-to-chip connection 30 in the integrated circuit package 12 using an additional connection to a ball grid array (BGA) 50 of the integrated circuit package 12. FIG. 2 illustrates a block diagram of the integrated circuit package 12 including the first integrated circuit 26 and the second integrated circuit 28. Input/output (IO) pins 52 of the first integrated circuit 26 are connected to IO pins 54 of the second integrated circuit 28 via the chip-to-chip connection 30. Modeling a direct connection between the first integrated circuit 26 and the second integrated circuit 28 could involve fully modeling both the first integrated circuit 26 and the second integrated circuit 28, but doing so could be prohibitively difficult for some third-party integrated circuit designers. However, by coupling the chip-to-chip connection 30 to the BGA 50, modeling the chip-to-chip connection 30 is simplified.

FIG. 3 illustrates a circuit diagram 70 of the resistive, inductive, and capacitive (RLC) characteristics of the chip-to-chip connection 30 from the perspective of an IO pin 52 of the first integrated circuit. The IO pin 52 is connected in parallel to the IO pin 54 of the second integrated circuit and a BGA 50 ball. On the branch of the circuit diagram 70 from the IO pin 52 to the BGA 50 ball, there is a resistance Rp_ball and an inductance Lp_ball. The capacitance of this branch of the circuit diagram 70 is defined by capacitances in parallel, the capacitance due to the BGA ball (Cp_ball) and the capacitance due to a board on which the BGA ball is attached (Cboard). On the branch of the circuit diagram 70 from the IO pin 52 to the IO pin 54, there is a resistance Rp_chiplet and an inductance Lp_chiplet. The capacitance of this branch of the circuit diagram 70 is defined by capacitances in parallel, the capacitance due to the IO pin 54 (Cp_chiplet) and the capacitance due to the second integrated circuit 26 (Cchiplet).

The designer may provide the capacitive load of the package board (Cboard) and the capacitive load of the second integrated circuit 28 (Cchiplet) to the design software. The design software may read parasitics for the second integrated circuit 28 connection (Rp_chiplet, Lp_chiplet and Cp_chiplet) at runtime from a particular file (e.g., as indicated by a CUSTOM PACKAGE NETWORK SETTING of the design software, such as a QSF of Intel^{®} Quartus^{®}). If this setting of the design software is not set, the design software may use zero RLC values as the parasitics for the connection to the second integrated circuit 28 connection. The parasitics for the bump to ball connection from the IO 52 to the BGA 50 ball (Rp_ball, Lp_ball, Cp _ball) may be read from a device database, since the details of the package of the integrated circuit package 12 may be known, tested, and stored by the manufacturer. In other words, for timing to the secondary loads when the CUSTOM_PACKAGE_NETWORK SETTING is available, the design software may use the delay in the runtime parasitics file as the delay from the IO pin 50 to the IO pin 52. Additionally or alternatively, the designer may specify only the inductance (L) and capacitance (C) values in the runtime parasitics for the second integrated circuit 28 connection (Lp_chiplet, Cp_chiplet) and the design software may set the delay to be sqrt(LC).

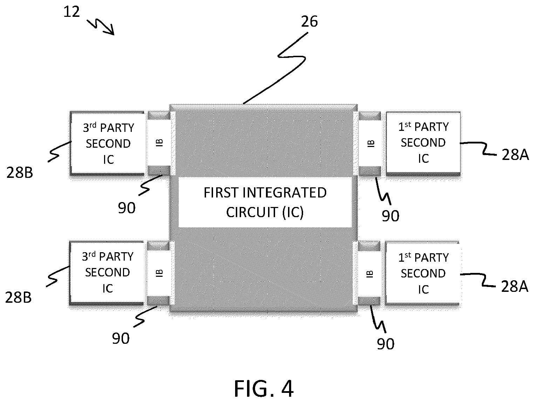

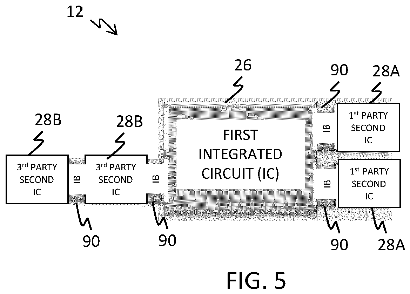

The integrated circuit package 12 may take a variety of forms. For example, as shown in FIG. 4, the integrated circuit package 12 may include a main first integrated circuit 26 connected to multiple second integrated circuits 28 though interface bridges 90 (e.g., an interposer, an embedded interface bridge (EMIB)). In the example of FIG. 4, there are two first-party second integrated circuits 28A connected to the first integrated circuit 26 and two third-party second integrated circuits 28B connected directly to the first integrated circuit 26 in parallel. In another example shown in FIG. 5, a main first integrated circuit 26 is connected to multiple first-party second integrated circuits 28A and multiple third-party second integrated circuits 26B. However, in the example of FIG. 5, the third-party second integrated circuits 28B are connected to the first integrated circuit device in series. Nevertheless, using the timing modeling technique of this disclosure, the design software may perform timing analysis on the chip-to-chip connection between the first integrated circuit 26 and the third-party second integrated circuits 28B.

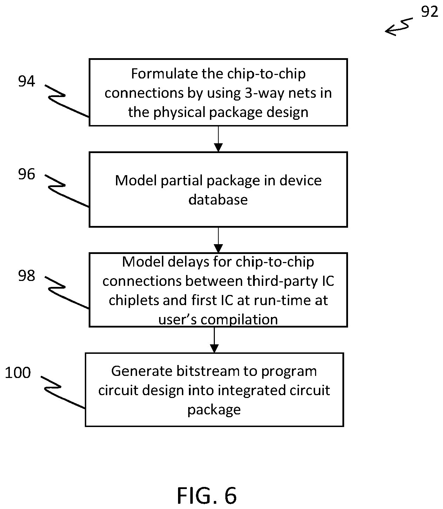

A flowchart 92 shown in FIG. 6 illustrates a manner of performing timing analysis for a chip-to-chip connection between a first integrated circuit and one or more second integrated circuits. The method of flowchart 92 may include formulating chip-to-chip connections between the first integrated circuit and the one or more second integrated circuits (block 94), modeling a partial package in the device database of the design software (block 96), modeling delays for chip-to-chip connections between third-party second integrated circuits and the first integrated circuit at run-time at the user compilation time (block 98), and subsequently generating configuration data (e.g., a bitstream) that may be used to program the programmable logic of the integrated circuit package 12 that accounts for delays in the chip-to-chip connection between the first integrated circuit and the one or more second integrated circuits (block 100). If the configuration data were not generated to account for the delays in the chip-to-chip connection, the integrated circuit package may malfunction or operate unexpectedly when attempting communication between the first integrated circuit and the third-party second integrated circuit.

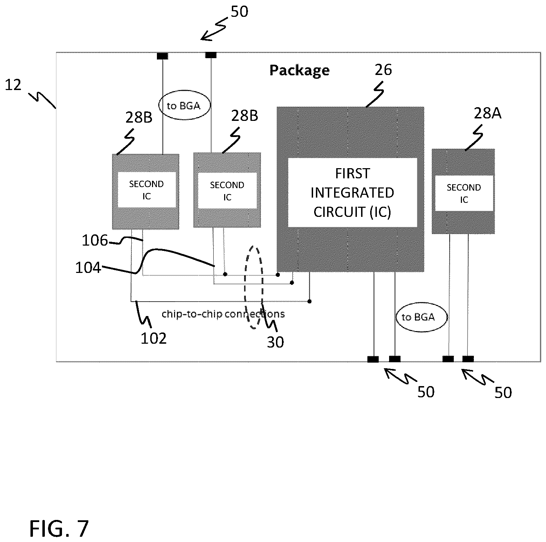

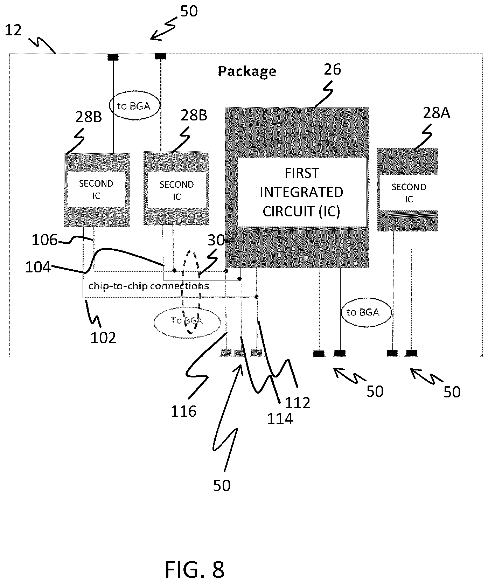

An example of the actions of block 94 of the flowchart 92 of FIG. 6 is shown in FIGS. 7 and 8. FIG. 7 is a block diagram of an initial circuit design that a designer may wish to implement on the integrated circuit package 12. In the example of FIG. 7, the integrated circuit package 12 of FIG. 7 includes a main first integrated circuit 26, a first-party second integrated circuit 28A connected to the BGA 56 of the package and multiple third-party second integrated circuits 28B. The first-party second integrated circuit 28A is shown not to be connected directly to the first integrated circuit 26 via a chip-to-chip connection. The first integrated circuit 26 and the multiple third-party second integrated circuits 28B are connected via chip-to-chip connections 30, here shown as a first connection 102, a second connection 104, and a third connection 106. In an actual implementation, there may be numerous (e.g., 5, 10, 25, 50, 100, 200, 500, 1000, or more) chip-to-chip connections 30 between the first integrated circuit 26 and the third-party second integrated circuits 28B and/or the first-party second integrated circuit 28A.

As mentioned at block 94 of the flowchart 92 of FIG. 6, to ease the timing modeling process, the initial circuit design of the integrated circuit package 12 (e.g., as shown in FIG. 7) may be modified to connect the chip-to-chip connections 30 to the BGA 50 (e.g., as shown in FIG. 8). This is shown in the example of FIG. 8, where new BGA 50 connections 112, 114, and 116 have been added that connect to connections 102, 104, and 106, respectively. These additional connections to the BGA 50 may serve multiple purposes. First, adding the connections to the BGA 50 enables chip-to-chip delays to be captured in the design software using BGA pins as how PLD IO to BGA pins delays have been modeled historically in design software such as Intel^{®} Quartus^{®} by Intel Corporation. This results in design software modeling infrastructure reuse. In addition, adding the connections to the BGA 50 allows end customers to observe the chip-to-chip data flow on the boards through the BGA pins 50.

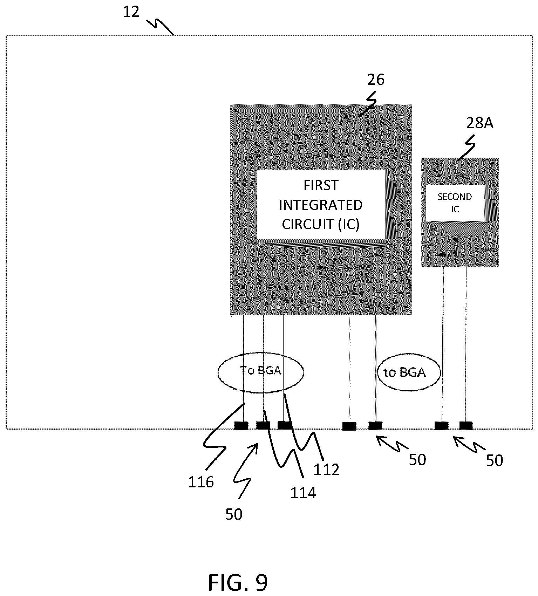

Thereafter, as in an example shown in FIG. 9, only the first-party integrated circuits (e.g., the first integrated circuit 26 and the first-party second integrated circuit 28A) may be fully modeled in the design software and the actual model of the third-party second integrated circuits 28B may be abstracted. This may be understood as modeling the partial package using a device database of the design software (e.g., block 96 of the flowchart 92 of FIG. 6) without the third-party integrated circuits in the device database. By way of example, only PLD and tiles (e.g., the first integrated circuit 26 and the third-party integrated circuit 28A) may be modeled in device database because they are first-party proprietary and may be configured by the design software programmer. Meanwhile, delays for chip-to-chip connections between third-party second integrated circuits 28B and the first integrated circuit 26 may be modeled at run-time at the user's design software compilation.

In this way, designers may avoid providing exceptionally detailed integrated circuit models, preserving the privacy of proprietary third-party integrated circuits and avoiding a tremendous amount of time and labor. Instead, when a designer creates a circuit design for an integrated circuit package in the design software that targets a physical package with chip-to-chip connections between a first integrated circuit (e.g., PLD) and a third-party integrated circuit (e.g., chiplet), the designer may simply provide parasitic data. The parasitic data may be provided in a file of any suitable format. For example, the parasitic data may be defined in comma separated values (CSV) or other textual format to the design software.

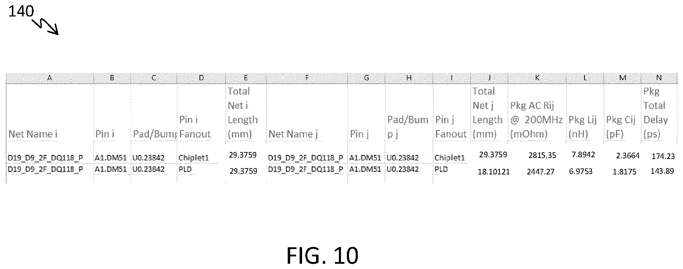

One example of a file that may be provided by a designer to the design software is illustrated as a file 140 of FIG. 10. The file 140 may specify one or more net names, one or more pins, a pad or bump identifier, one or more pin fanouts, and/or total lengths of the one or more nets. In addition, for each net, the file may specify package AC resistance (Pkg AC Rij @200 MHz in units of milliOhms (mOhm)), a package inductance (Pkg Lij in nanoHenry (nH)), a package capacitance (Pkg Cij in picoFarads (pF)), and/or a package total delay (ps).

This data may be provided, for example, by a physical package design team. The file is sent to the design software at compilation. For example, this may be done using a settings assignment, and may follow a format such as shown below:

```
 // pass to design software timing analysis engine the package chip-to-chip parasitic data
 set_global_assignment -name CUSTOM PACKAGE NETWORK test_chiplet_parasitics.csv
```

Where CUSTOM PACKAGE NETWORK represents a setting used by the design software to define where the design software will obtain parasistic data for a chip-to-chip connection between a first integrated circuit and a second integrated circuit of an integrated circuit package. If the CUSTOM_PACKAGE_NETWORK SETTING is used, the file indicated by this SETTING may contain chiplet connection parasitics for: (1) all the output pins connected to a second integrated circuit (e.g., chiplet) and to the package BGA ball and (2) all the input pins driven by a second integrated circuit (e.g., chiplet). Example code is provided below:

```
 // pin is served as ID to connect design to the parasitic data provided in above CSV file
 set location assignment PIN_U48 -to q[0]
 set location assignment PIN_DM51 -to d
```

As mentioned above, the output pins of the first integrated circuit may connect to a second integrated circuit (e.g., a chiplet) as well as the package BGA ball. The runtime parasitics file indicated by the CUSTOM_PACKAGE_NETWORK SETTING may include second integrated circuit (e.g., chiplet) connection parasitics for all output pins of the first integrated circuit that are connected both to a second integrated circuit (e.g., chiplet) and to the package BGA ball.

Recall that the circuit diagram 70 of FIG. 3 indicates the RLC values that are used to load the output buffers for pins of the first integrated circuit that are connected to a second integrated circuit (e.g., chiplet) and the package BGA ball. The RLC values may be determined as follows:

First, the designer may provide the second integrated circuit (e.g., chiplet) load (Cchiplet) and the load on the package BGA ball (Cboard) with the settings such as the following:

```
 set instance _assignment -name OUTPUT PIN SECONDARY LOAD 20 -to q[0]
 set instance assignment -name OUTPUT PIN LOAD 20 -to q[0]
```

The parasitics for the second integrated circuit (e.g., chiplet) connection (Rp_chiplet, Lp_chiplet and Cp_chiplet) may be read at the design software runtime from the file indicated by the CUSTOM _PACKAGE_NETWORK SETTING, if present. If this setting is not set, then the design software may use zero RLC values as the parasitics for the second integrated circuit (e.g., chiplet) connection.

The parasitics for the usual bump to ball connection (Rp _ball, Lp _ball, Cp _ball) may be read from the device database for the design software.

When timing to the secondary loads and in the presence of the CUSTOM _PACKAGE_NETWORK SETTING, the design software may use the delay in the runtime parasitics file as the delay from the pin to the second integrated circuit (e.g., chiplet) input pin. Additionally or alternatively, the designer may specify only the L and C values in the runtime parasitics for the second integrated circuit (e.g., chiplet) connection (Lp_chiplet, Cp_chiplet) and the design software may set the delay to be sqrt(LC).

For timing to the secondary loads of the second integrated circuits (e.g., chiplets), if the CUSTOM _PACKAGE_NETWORK SETTING is not set, the design software may use zero as the delay from the output pin of the first integrated circuit to the second integrated circuit (e.g., chiplet) input pin.

With respect to input pins of the first integrated circuit (e.g., PLD) that are driven by a second integrated circuit (e.g., chiplet), The runtime parasitics file indicated by the CUSTOM_PACKAGE_NETWORK SETTING defines the pins of the first integrated circuit (e.g., PLD) that are connected to the second integrated circuit (e.g., chiplet). That is, the input pins of the first integrated circuit with the second integrated circuit (e.g., chiplet) connection parasitics in the runtime parasitics file are exactly the pins driven by a second integrated circuit (e.g., chiplet). For instance, the sample file provided in FIG. 10 indicates that only pin DM51 is driven by a second integrated circuit (e.g., chiplet).

The designer may provide the input transition time with a SETTING (e.g., QSF) such as provided below:

```
 set_instance_assignment -name INPUT_TRANSITION_TIME "1000 ps" -to datain
```

The delay from the second integrated circuit (e.g., chiplet) output pin to the first integrated circuit (e.g., PLD) input pin provided in the runtime parasitics file indicated by the CUSTOM _PACKAGE_NETWORK SETTING may replace the package delay of the input pin for the first integrated circuit that is built into the device database of the design software. Additionally or alternatively, the designer may specify only the L and C values in the runtime parasitics for the chiplet connection and the design software may set the delay to be sqrt(LC).

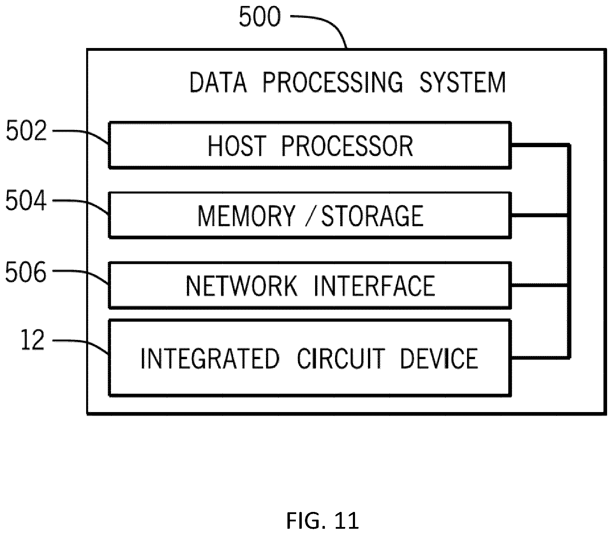

The integrated circuit package 12 may be a component included in a data processing system, such as a data processing system 500, shown in FIG. 11. The data processing system 500 may include the integrated circuit system 12 (e.g., a programmable logic device), a host processor 502, memory and/or storage circuitry 504, and a network interface 506. The data processing system 500 may include more or fewer components (e.g., electronic display, user interface structures, application specific integrated circuits (ASICs)). The host processor 502 may include any of the foregoing processors that may manage a data processing request for the data processing system 500 (e.g., to perform encryption, decryption, machine learning, video processing, voice recognition, image recognition, data compression, database search ranking, bioinformatics, network security pattern identification, spatial navigation, cryptocurrency operations, or the like). The memory and/or storage circuitry 504 may include random access memory (RAM), read-only memory (ROM), one or more hard drives, flash memory, or the like. The memory and/or storage circuitry 504 may hold data to be processed by the data processing system 500. In some cases, the memory and/or storage circuitry 504 may also store configuration programs (e.g., bitstreams, mapping function) for programming the integrated circuit package 12. The network interface 506 may allow the data processing system 500 to communicate with other electronic devices. The data processing system 500 may include several different packages or may be contained within a single package on a single package substrate. For example, components of the data processing system 500 may be located on several different packages at one location (e.g., a data center) or multiple locations. For instance, components of the data processing system 500 may be located in separate geographic locations or areas, such as cities, states, or countries.

The data processing system 500 may be part of a data center that processes a variety of different requests. For instance, the data processing system 500 may receive a data processing request via the network interface 506 to perform encryption, decryption, machine learning, video processing, voice recognition, image recognition, data compression, database search ranking, bioinformatics, network security pattern identification, spatial navigation, digital signal processing, or other specialized tasks.

While the embodiments set forth in the present disclosure may be susceptible to various modifications and alternative forms, specific embodiments have been shown by way of example in the drawings and have been described in detail herein. However, it should be understood that the disclosure is not intended to be limited to the particular forms disclosed. The disclosure is to cover all modifications, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

### Example Embodiments

EXAMPLE EMBODIMENT 1. A method comprising:
receiving a circuit design into design software running on data processing circuitry;
performing timing analysis for a first chip-to-chip connection between a first integrated circuit and a second integrated circuit of the circuit design based on modeling the first integrated circuit and the second integrated circuit using the design software running on the data processing circuitry; and
performing timing analysis for a second chip-to-chip connection between the first integrated circuit and a third integrated circuit of the circuit design without modeling the third integrated circuit using the design software running on the data processing circuitry.

EXAMPLE EMBODIMENT 2. The method of example embodiment 1, wherein the first integrated circuit and the second integrated circuit are modeled based on a device database storing a hardware model of the first integrated circuit and the second integrated circuit.

EXAMPLE EMBODIMENT 3. The method of example embodiment 1, wherein the timing analysis for the second chip-to-chip connection between the first integrated circuit and the third integrated circuit is performed based on user-specified parasitic data.

EXAMPLE EMBODIMENT 4. The method of example embodiment 3, wherein the user-specified parasitic data comprises a capacitive load of the third integrated circuit and a capacitive load on a package ball grid array ball.

EXAMPLE EMBODIMENT 5. The method of example embodiment 3, wherein the user-specified parasitic data is provided in a comma separated value (CSV) file that defines a relationship between an output pin of the first integrated circuit, an input pin of the third integrated circuit, and a package ball of a package ball grid array.

EXAMPLE EMBODIMENT 6. The method of example embodiment 1, wherein the first integrated circuit and the second integrated circuit are first party to the design software.

EXAMPLE EMBODIMENT 7. The method of example embodiment 1, wherein the third integrated circuit is third party to the design software.

EXAMPLE EMBODIMENT 8. The method of example embodiment 1, wherein the first integrated circuit and second integrated circuit are designed by a first entity and the third integrated circuit is designed by a second entity.

EXAMPLE EMBODIMENT 9. The method of example embodiment 1, wherein the circuit design defines the second chip-to-chip connection as connecting to a package ball of a package ball grid array.

EXAMPLE EMBODIMENT 10. The method of example embodiment 1, wherein the timing analysis for the second chip-to-chip connection is performed at runtime at compilation.

EXAMPLE EMBODIMENT 11. The method of example embodiment 1, comprising generating configuration data to program the first integrated circuit based at least in part on the timing analysis for the second chip-to-chip connection.

EXAMPLE EMBODIMENT 12. A system comprising:
an integrated circuit package comprising a first integrated circuit connected to a second integrated circuit via a chip-to-chip connection, wherein the chip-to-chip connection is also connected to a package ball; and
a computing system to perform timing analysis on a circuit design for the first integrated circuit with respect the chip-to-chip connection based on user-specified parasitic data relating to the connection to the package ball.

EXAMPLE EMBODIMENT 13. The system of example embodiment 12, wherein the computing system is to generate configuration data to program the first integrated circuit based on the timing analysis to enable the first integrated circuit to communicate with the second integrated circuit via the chip-to-chip connection.

EXAMPLE EMBODIMENT 14. The system of example embodiment 12, wherein the first integrated circuit comprises field programmable gate array (FPGA) circuitry.

EXAMPLE EMBODIMENT 15. The system of example embodiment 12, comprising a board on which the integrated circuit package is installed or is to be installed, wherein the user-specified parasitic data comprises a capacitive load of the board on the package ball.

EXAMPLE EMBODIMENT 16. The system of example embodiment 12, wherein the user-specified parasitic data comprises a capacitive load of the second integrated circuit.

EXAMPLE EMBODIMENT 17. The system of example embodiment 12, wherein the computing system is to model internal circuitry of the first integrated circuit without modeling internal circuitry of the second integrated circuit.

EXAMPLE EMBODIMENT 18. The system of example embodiment 12, wherein the integrated circuit package comprises a third integrated circuit connected to the first integrated circuit via a second chip-to-chip connection, wherein the computing system is to perform timing analysis on the second chip-to-chip connection, wherein performing the timing analysis comprises modeling internal circuitry of the first integrated circuit and modeling internal circuitry of the third integrated circuit.

EXAMPLE EMBODIMENT 19. One or more tangible, non-transitory, machine-readable media comprising instructions that, when executed, cause performance of operations comprising:
receiving a circuit design describing at least a first integrated circuit of an integrated circuit package comprising the first integrated circuit connected to a second integrated circuit via a chip-to-chip connection, wherein the chip-to-chip connection is also connected to a package ball; and
performing timing analysis on the circuit design for the first integrated circuit with respect the chip-to-chip connection based on user-specified parasitic data relating to the connection to the package ball.

EXAMPLE EMBODIMENT 20. The one or more media of example embodiment 19, wherein the operations comprise generating configuration data to program the first integrated circuit based on the timing analysis to enable the first integrated circuit to communicate with the second integrated circuit via the chip-to-chip connection.

## Claims

1. A method comprising:
receiving a circuit design into design software running on data processing circuitry;
performing timing analysis for a first chip-to-chip connection between a first integrated circuit and a second integrated circuit of the circuit design based on modeling the first integrated circuit and the second integrated circuit using the design software running on the data processing circuitry; and
performing timing analysis for a second chip-to-chip connection between the first integrated circuit and a third integrated circuit of the circuit design without modeling the third integrated circuit using the design software running on the data processing circuitry.

2. The method of claim 1, wherein the first integrated circuit and the second integrated circuit are modeled based on a device database storing a hardware model of the first integrated circuit and the second integrated circuit.

3. The method of any of the preceding claims, wherein the timing analysis for the second chip-to-chip connection between the first integrated circuit and the third integrated circuit is performed based on user-specified parasitic data.

4. The method of claim 3, wherein the user-specified parasitic data comprises a capacitive load of the third integrated circuit and a capacitive load on a package ball grid array ball.

5. The method of claim 3 or 4, wherein the user-specified parasitic data is provided in a comma separated value (CSV) file that defines a relationship between an output pin of the first integrated circuit, an input pin of the third integrated circuit, and a package ball of a package ball grid array.

6. The method of any of the preceding claims, wherein the first integrated circuit and the second integrated circuit are first party to the design software.

7. The method of any of the preceding claims, wherein the third integrated circuit is third party to the design software.

8. The method of any of the preceding claims, wherein the first integrated circuit and second integrated circuit are designed by a first entity and the third integrated circuit is designed by a second entity.

9. The method of any of the preceding claims, wherein the circuit design defines the second chip-to-chip connection as connecting to a package ball of a package ball grid array.

10. The method of any of the preceding claims, wherein the timing analysis for the second chip-to-chip connection is performed at runtime at compilation.

11. The method of any of the preceding claims, comprising generating configuration data to program the first integrated circuit based at least in part on the timing analysis for the second chip-to-chip connection.

12. A system comprising:
an integrated circuit package comprising a first integrated circuit connected to a second integrated circuit via a chip-to-chip connection, wherein the chip-to-chip connection is also connected to a package ball; and
a computing system to perform timing analysis on a circuit design for the first integrated circuit with respect the chip-to-chip connection based on user-specified parasitic data relating to the connection to the package ball.

13. The system of claim 12, wherein the computing system is to generate configuration data to program the first integrated circuit based on the timing analysis to enable the first integrated circuit to communicate with the second integrated circuit via the chip-to-chip connection.

14. The system of claim 12 or 13, wherein the first integrated circuit comprises field programmable gate array (FPGA) circuitry.

15. The system of any of claims 12-14, comprising a board on which the integrated circuit package is installed or is to be installed, wherein the user-specified parasitic data comprises a capacitive load of the board on the package ball.
